# FASCICULE DE BREVET EUROPEEN

(11) **EP 0 384 869 B1**
(45) Date de publication et mention de la délivrance du brevet: **01.12.1993**
(21) Numéro de dépôt: 90440013.2
(22) Date de dépôt: 16.02.1990
(51) Int. Cl.: B65G 57/18

(54) **Procédé et appareil pour empiler des articles cylindriques couches sur un support plat, notamment sur une palette**
Verfahren und Vorrichtung zum Stapeln zylindrischer Gegenstände in Schichten auf einem Träger, insbesondere auf einer Palette
Method and device for piling cylindrical objects in layers on a flat support such as a pallet

(30) Priorité: 20.02.1989 FR 8902323
(43) Date de publication de la demande: 29.08.1990
(73) Titulaire: PACK'IN S.A.R.L., 68200 Mulhouse (FR)
(72) Inventeur: Ochsenbein, Charles, F-68170 Rixheim (FR)
(74) Mandataire: Nithardt, Roland

(56) Documents cités:
- DE-A- 2 712 380
- DE-A- 3 521 837
- DE-A- 3 619 089
- GB-A- 2 181 402
- PATENT ABSTRACTS OF JAPAN, vol. 8, no. 253 (M-339)[1690], 20 novembre 1984; & JP-A-59 128 127 (MATSUSHITA DENKO K.K.) 24-07-1984

## Description

La présente invention concerne un procédé pour empiler des articles cylindriques dans des positions couchées parallèles sur une surface plate d'un support de transport, notamment d'une palette, dans lequel on forme une pile de paquets superposés qui comprennent chacun au moins un rang horizontal d'articles et au moins deux attaches souples entourant l'ensemble des articles du paquet, un rang comprenant au moins trois articles, dans lequel on forme le ou les rangs constituant un paquet sur un premier support qui est séparé du support de transport, dans lequel on transfère ledit paquet de manière à le déposer sur le support de transport ou sur un paquet déposé auparavant sur ce support, et dans lequel on ligature le paquet au moyen desdites attaches avant, pendant ou après son transfert vers le support de transport. L'invention concerne également un appareil pour la mise en oeuvre de ce procédé, comportant une aire de formation d'un rang d'articles cylindriques juxtaposés dans des positions couchées parallèles.

L'invention s'applique plus particulièrement, mais pas exclusivement, à la manutention de tubes en carton. Dans ce domaine, on fabrique et on livre des tubes de dimensions très variées, ce qui complique beaucoup l'automatisation de la manutention, notamment pour le stockage et l'expédition de lots de tubes. Si l'on veut empiler des tubes d'une taille donnée pour former des paquets, d'une part il faut employer des châssis ayant des dimensions spécialement appropriées à cette taille et au nombre des tubes, et d'autre part il faut ajuster les machines de manutention pratiquement à chaque changement d'une dimension des tubes.

La publication DE-A-2 712 380 décrit un procédé permettant d'empiler des tubes en position horizontale sur une palette dépourvue de parois ou de montants retenant latéralement les tubes. Dans une première forme du procédé, on forme d'abord de petits paquets de deux tubes ligaturés par une paire d'attaches souples, on superpose plusieurs de ces paquets en interposant des cales en position médiane pour que les tubes soient alignés suivant une maille carrée et ne se mettent pas en quiconce, puis on ligature le gros paquet ainsi formé et on le fait basculer de 90° pour le déposer sur la palette.

Ces paquets comportant deux niveaux de tubes peuvent être empilés, puis ligaturés ensemble. Une autre forme du procédé consiste à former des gros paquets en déposant un premier rang horizontal de tubes, puis une paire de cales transversales et un second rang de tubes, posé sur ces cales. Les cales sont profilées de façon à maintenir les tubes du second rang à la verticale de ceux du premier rang. Dans ses différentes formes, ce procédé nécessite des opérations et/ou des équipements particuliers pour maintenir l'alignement vertical des tubes superposés. De plus, il ne permet pas une adaptation facile des appareils en cas de changement de diamètre des tubes. Enfin, l'utilisation de cales complique la mise en oeuvre tant manuelle qu'automatique du procédé.

Dans la publication Patent Abstracts of Japan, vol. 8, N° 253 (M-339) [1690], il est prévu de déposer un à un, directement sur une palette pourvue de rebords de retenue, des articles cylindriques pour former un premier rang, puis un second rang d'articles disposés en quinconce sur ceux du premier rang. Avec ce procédé, chaque rang est plus court que le précédent, si bien qu'on obtient une pile à section transversale trapézoïdale ou triangulaire. Il va de soi qu'on préfère généralement réaliser une pile dont la forme est à peu près parallélépipédique.

Un appareil agencé pour déplacer un groupe d'articles cylindriques en béton, les mettre sur un rang et les déposer sur une palette est décrit dans le DE-A- 3 521 837. Toutefois ces articles ne sont pas ligaturés pour former des paquets qu'on pourrait empiler.

La présente invention vise à éviter les inconvénients de l'état de la technique, en fournissant un procédé et un appareil permettant d'empiler d'une manière commode des articles cylindriques tels que des tubes, ayant des diamètres et des longueurs susceptibles de varier, sur un support plat pouvant être dépourvu de parois ou montants latéraux pour retenir les articles, par exemple sur une palette de transport.

Dans ce but, l'invention fournit un procédé du type indiqué en préambule, caractérisé en ce qu'un paquet comprend au moins deux rangs horizontaux d'articles juxtaposés, les articles étant disposés les uns sur les autres en quiconce et en ce que, pour former un paquet, on forme d'abord un rang supérieur comportant un nombre donné d'articles, on soulève ce rang supérieur et l'on forme en-dessous de lui un rang inférieur comportant un article de plus que le rang supérieur, puis on abaisse le rang supérieur et on le dépose sur le rang inférieur avant de ligaturer le paquet. On peut former ainsi des paquets qui comprennent de deux à quatre rangs d'articles et qui sont stables quand ils reposent sur une surface horizontale.

De préférence, on forme ensuite au moins un deuxième paquet de la même manière que le premier, et l'on transfère ce deuxième paquet de manière à l'empiler sur le premier reposant sur le support de transport. On peut fixer plusieurs paquets empilés sur le support de transport, au moyen d'attaches souples entourant à la fois le support et l'ensemble des paquets.

Un appareil pour la mise en oeuvre du procédé selon la présente invention est caractérisé en ce qu'il comporte des moyens de gerbage pour soulever au moins un rang d'articles de l'aire de formation et pour le déposer sur un autre rang d'articles formé sur cette aire, des moyens pour ligaturer ensemble au moins deux rangs d'articles superposés de façon à former un paquet, un poste de palettisation pourvu d'un emplacement pour au moins une palette de transport desdits paquets, et des moyens de manutention agencés pour transférer successivement chaque paquet de l'aire de formation au poste de palettisation, et en ce que les moyens de manutention comportent au moins un support horizontal mobile dans un plan transversal par rapport à la direction axiale des articles, pour déposer chaque paquet sur au moins une palette ou sur un autre paquet déjà déposé sur une palette.

De préférence, l'aire de formation est définie par les surfaces supérieures d'au moins deux supports parallèles, indépendants mécaniquement l'un de l'autre, disposés perpendiculairement aux articles et espacés l'un de l'autre, ainsi que par une butée latérale mobile se trouvant sur un côté de l'aire où les articles sont amenés transversalement l'un après l'autre, par une butée latérale stationnaire sur le côté opposé, et par une paire de butées verticales d'alignement montées aux deux extrémités de l'aire de manière mobile l'une vers l'autre pour aligner les extrémités des articles d'un paquet.

Chacun desdits supports parallèles peut comporter un organe de convoyage des articles en direction de la butée latérale stationnaire, et la butée latérale mobile peut être pourvue d'une commande automatique comprenant un organe de comptage des articles entrant dans l'aire de formation.

Dans une forme de réalisation avantageuse, les moyens de gerbage comportent une paire de bras sensiblement parallèles aux deux supports de l'aire de formation et mobiles dans leur direction longitudinale sur au moins un chariot mobile verticalement. Pour leur part, les moyens pour ligaturer comportent au moins une unité de ligaturage automatique, montée de manière mobile dans la direction axiale des articles pour être placée dans des positions sélectionnées le long d'un paquet d'articles.

De préférence, ledit support horizontal peut être mobile horizontalement sur un chariot qui est mobile verticalement sur un bâti.

Dans une réalisation s'adaptant très facilement à différentes longueurs d'articles, l'appareil comporte au moins deux unités de transfert et d'empilage, disposées symétriquement l'une de l'autre par rapport à un plan médian vertical perpendiculaire à la direction axiale des articles, ces unités comprenant au moins les moyens de gerbage et les moyens de manutention et étant commandées en synchronisme pour traiter ensemble chaque article et chaque paquet, et l'espacement entre ces deux unités est réglable. De préférence, chaque unité de transfert et d'empilage comporte un bâti mobile sur une voie de roulement, ce bâti supportant les organes de l'aire de formation, les moyens de gerbage et les moyens de manutention qui sont prévus sur cette unité. Ledit bâti peut présenter une surface supérieure horizontale définissant un poste d'attente pour au moins un paquet, et les moyens de manutention peuvent comprendre un premier moyen de transfert des paquets entre l'aire de formation et le poste d'attente, et un second moyen de transfert des paquets entre le poste d'attente et le poste de palettisation.

D'autres caractéristiques et les avantages de la présente invention apparaitront mieux dans la description suivante d'exemples de réalisation, en référence aux dessins annexés, dans lesquels :
La figure 1 est une vue schématique en élévation d'une forme de réalisation d'un palettiseur à tubes selon l'invention,
La figure 2 représente en plan les principaux éléments de cet appareil, et
La figure 3 représente schématiquement la formation d'un paquet à deux rangs de tubes dans cet appareil.

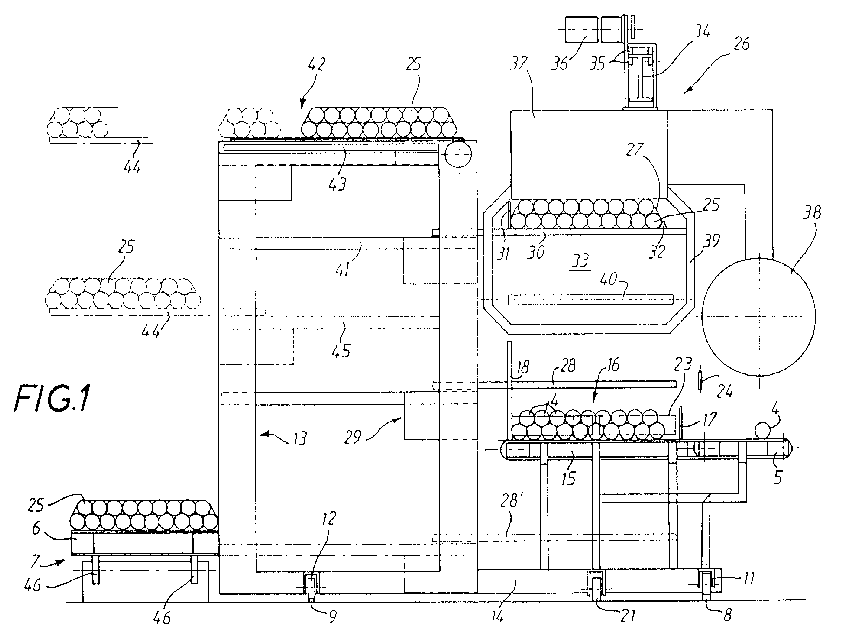

L'appareil palettiseur représenté dans les figures 1 à 3 se compose de deux unités de transfert et d'empilage 1 et 2 qui sont semblables, mais symétriques l'une de l'autre par rapport à un plan vertical médian 3, pour recevoir des tubes en carton 4 orientés perpendiculairement au plan 3 et amenés transversalement à eux-mêmes par un convoyeur d'alimentation à courroie 5, et pour empiler ces tubes sur des palettes 6 dans un poste de palettisation 7. Les deux unités 1 et 2 sont indépendantes mécaniquement l'une de l'autre et elles sont mobiles en translation sur des rails 8, 9 parallèles aux tubes 4, pour permettre le positionnement des unités à n'importe quel point de la longueur des tubes en fonction des dimensions de ceux-ci. Cela permet aussi d'escamoter entièrement les unités 1, 2 si besoin est. Les deux unités sont équipées de commandes et de moteurs électriques et elles sont asservies électriquement entre elles de manière à assurer la simultanéité des mouvements de manutention des tubes.

Pour simplifier, on décrira ci-dessous la construction de l'unité de transfert et d'empilage 1, étant entendu que l'unité 2 lui est symétrique et que ses organes portent les mêmes numéros de référence. L'unité 1 comporte un bâti rigide monté sur des roues 11, 12 et comprenant notamment un cadre vertical 13 et une traverse horizontale 14 prolongeant ce cadre du côté de l'arrivée des tubes 4, pour porter un convoyeur de regroupement 15 actionné pas à pas et disposé à la suite du convoyeur d'alimentation 5 pour supporter les tubes 4 dans une aire 16 de formation de paquets de tubes 25. Cette aire 16 est délimitée, du côté de l'arrivée des tubes 4, par une butée latérale 17 mobile verticalement, et du côté opposé par une butée stationnaire 18 relativement haute. En regard de chaque extrémité de cette aire se trouve une unité 20 d'alignement des tubes. L'unité 20 possède un châssis séparé, monté sur des roues 21 et guidé par le rail 8 au moyen d'un bras 22. Ce châssis porte une butée verticale 23 actionnée par un vérin pneumatique dans la direction de la flèche M pour s'appliquer contre les extrémités des tubes 4 de manière à les aligner. La butée mobile 17, le convoyeur pas à pas 15 et l'unité d'alignement 20 de chaque unité 1, 2 sont agencés pour former des paquets 25 de tubes 4 en étant pilotés par une commande centralisée (non représentée) coordonnant le fonctionnement de l'ensemble de l'appareil. L'entrée de chaque tube 4 dans l'aire 16 est signalée à ladite commande par une cellule de détection optique 24.

Le paquet de tubes 25 formé dans l'aire 16 est ensuite élevé, comme on le décrira plus loin, jusqu'à deux têtes de ligaturage automatique 26 fixant chacune une ou plusieurs ligatures souples 27 autour du paquet.

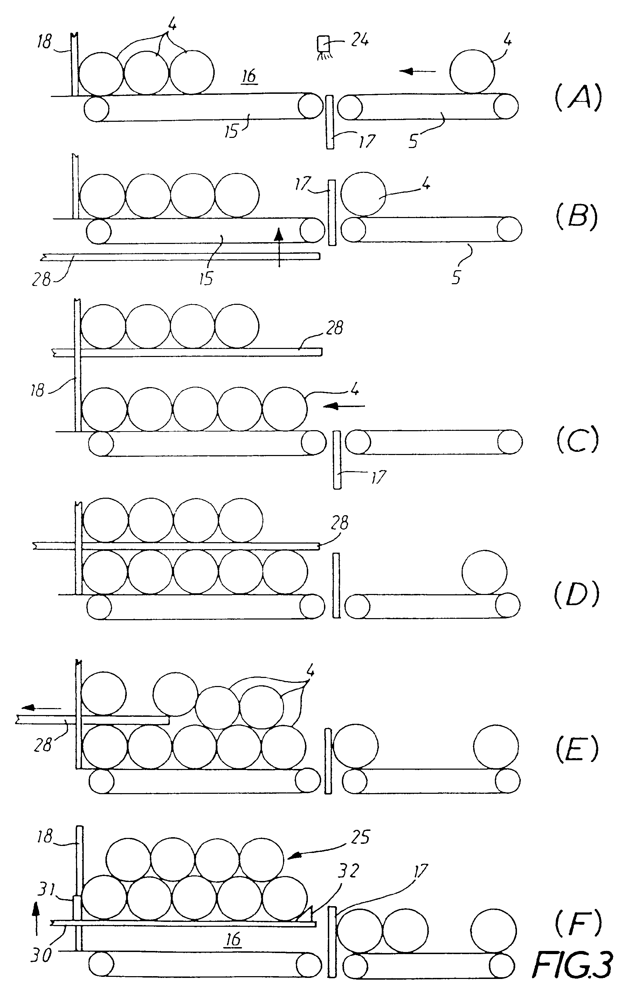

Les figures 3A à 3F représentent schématiquement les étapes successives de formation d'un paquet 25 de tubes 4 dans l'aire 16. Les tubes 4 amenés par le convoyeur 5 dans le sens de la flèche de la figure 3A franchissent la butée mobile 17 abaissée, sont comptés par la cellule 24 et arrivent sur le convoyeur de regroupement 15 qui avance pas à pas pour former un rang de tubes 4 appuyés contre la butée stationnaire 18. Quand un nombre prédéterminé de tubes 4 est atteint (quatre tubes dans le présent exemple), comme à la figure 3B, la butée mobile 17 remonte et retient momentanément les tubes amenés par le convoyeur 5. Pendant ce temps, une épée de gerbage 28, portée par un chariot motorisé 29 coulissant verticalement le long du cadre 13 (figure 1), monte comme l'indique la flèche de la figure 3B, en passant à côté du convoyeur 15, et soulève ce premier rang de tubes au-dessus de l'aire de formation, à la position illustrée par la figure 3C. La commande automatique abaisse alors la butée mobile 17 pour permettre la formation d'un second rang de tubes 4 disposé sous le premier et comprenant un tube de plus que lui, puis la butée 17 remonte.

Les figures 3D et 3E montrent comment les deux rangs de tubes sont posés l'un sur l'autre, l'épée 28 étant abaissée en figure 3D jusqu'au dessus du premier rang, puis retirée horizontalement suivant la flèche de la figure 3E de façon que les tubes 4 du rang supérieur se placent d'eux-mêmes en quinconce sur les tubes 4 du rang inférieur. L'épée 28 peut ensuite être abaissée et placée dans une position d'attente telle que la position 28' représentée en figure 1.

Dans certaines applications les opérations illustrées par les figures 3C et 3E pourraient être répétées pour réaliser un paquet comprenant un troisième rang, même un quatrième rang de tubes 4.

La figure 3F montre comment le paquet de tubes 25 est ensuite sou levé par une paire de premiers bras de transfert 30 jusqu'à un poste de ligaturage 33 où il est accessible aux têtes de ligaturage 26. Un nouveau cycle de formation d'un paquet de tubes peut alors se reproduire sur l'aire 16.

Pour maintenir ensemble les tubes 4 avant que le paquet 25 soit ligaturé, chaque bras 30 comporte une butée arrière fixe 31 et une butée avant 32 ajustable en fonction du nombre et de la taille des tubes. En revanche, une fois qu'il est muni des ligatures 27, chaque paquet 25 est stable aussi longtemps qu'il repose sur une surface approximativement horizontale, sans que des butées ou des parois latérales soient nécessaires. Cette caractéristique permet non seulement de transférer facilement les paquets de tubes 25 au moyen de supports horizontaux formés par exemple par deux bras parallèles, mais également de poser les paquets sur toute surface plate telle que la face supérieure d'une palette 6 dépourvue de parois ou de montants latéraux, et en outre d'empiler ces paquets les uns sur les autres. Bien qu'on ne décrive ici que des paquets formés de deux rangs de tubes placés en quinconce, on peut envisager d'empiler des paquets similaires comportant trois rangs ou plus.

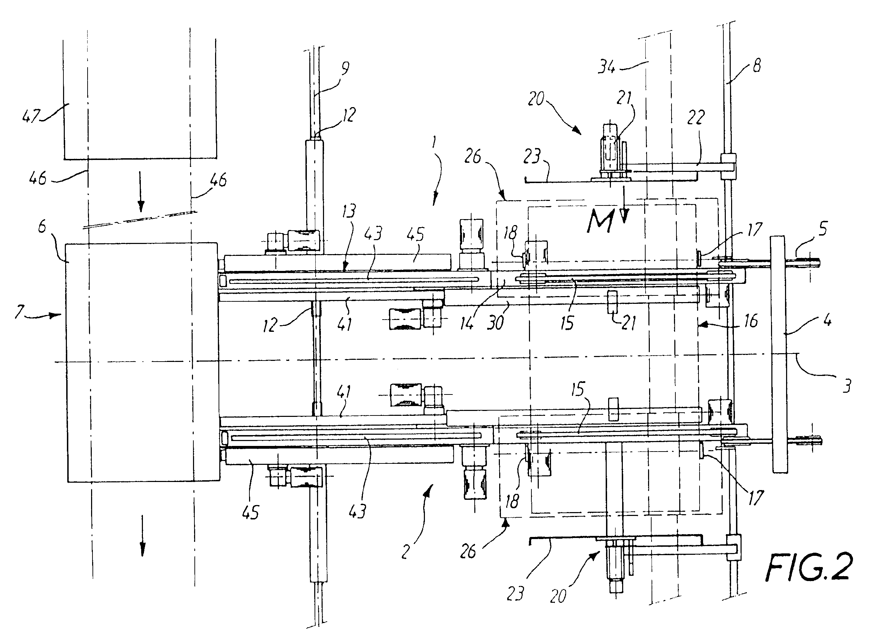

Les têtes de ligaturage 26 ne sont représentées en figure 2 que par leur emplacement figuré en traits interrompus afin de clarifier le dessin; elles sont mobiles le long d'un portique distinct pourvu d'un rail de roulement 34 le long duquel chaque tête 26 peut se déplacer sur commande, grâce à des galets 35 et un moteur 36. Une telle tête de ligaturage automatique est un appareil connu, pourvu d'un bloc central 37 recevant un lien souple continu d'un dévidoir 38 et utilisant ce lien pour former autour du paquet 25 une ligature scellée par soudure ou par tout autre moyen approprié. En position de repos, chaque tête 26 est reculée à distance de l'unité 1, 2 correspondante. Dès que les bras 30 ont amené le paquet de tubes 25 au poste de ligaturage 33, les têtes 26 sont introduites sur chaque extrémité du paquet 25 et réalisent chacune une ou plusieurs ligatures à des emplacements déterminés par le programme de commande. Cette opération terminée, les têtes reviennent à leur position de repos. Cependant, chaque tête est pourvue d'un cadre 39 portant un rouleau 40 capable de supporter le paquet de tubes, lequel est posé sur ces rouleaux par abaissement des bras 30 dans le cas où des ligatures doivent être posées entre ces bras, donc entre les unités de transfert et d'empilage 1 et 2.

Après le ligaturage, les deux bras 30 portés par leurs chariots respectifs 41 font monter le paquet de tubes 25 au niveau du sommet des cadres 13 et ils se rétractent (en direction de la gauche selon les figures 1 et 2) pour déposer le paquet 25 sur un poste d'attente 42 pourvu d'un convoyeur horizontal 43 au sommet de chaque cadre 13. De là, les paquets 25 sont repris et sont transportés jusqu'au poste de palettisation 7 au moyen d'une paire de bras de transfert 44 dont chacun se déplace horizontalement sur un chariot motorisé respectif 45 mobile verticalement le long du cadre 13. Comme chaque bras 44 a une surface supérieure lisse, une fois parvenu au poste de palettisation 7, il peut déposer le paquet 25 sur la palette 6 ou sur un autre paquet 25 s'y trouvant déjà, simplement en étant retiré vers l'intérieur du cadre 13 tandis que le paquet de tubes 25 est retenu par une butée montée sur ce cadre.

Le poste de palettisation 6 est traversé par deux convoyeurs à chaînes 46 véhiculant les palettes 6 et il est équipé d'un dispositif (non représenté) de centrage des palettes vides par rapport au plan médian 3. De préférence, ce poste est précédé d'un dépileur 47 de palettes vides et il est suivi d'un poste de cerclage où l'on attache ensemble la palette et les paquets de tubes qu'elle porte.

On conçoit aisément que le fonctionnement d'ensemble de l'appareil décrit ci-dessus peut être commandé par un dispositif de commande programmable, permettant un automatisme poussé et une adaptation facile aux changements de diamètre et de longueur des tubes. Une telle commande permet aussi un paramétrage des différents mouvements dans l'appareil en fonction des dimensions des tubes. De plus elle permet de coordonner le fonctionnement de l'appareil avec celui d'une machine de production qui l'alimente.

La description ci-dessus montre que les différents moyens utilisés pour préparer les rangs et les paquets de tubes sont pratiquement indépendants du diamètre des tubes. En outre, la conception de l'appareil en deux unités 1, 2 dont l'écartement est réglable permet une adaptation aisée aux différentes longueurs de tubes. En outre elle offre la possibilité de placer ces unités dans une zone de dégagement, s'il faut libérer la zone du plan médian 3 pour un autre type de manutention. Grâce à la possibilité d'automatisation complète du fonctionnement de l'appareil, celui-ci peut fonctionner sans opérateur permanent, le personnel n'intervenant que pour changer la pile de palettes dans le dépileur 47 ou le dévidoir de liens 38, ou pour les changements de programme de commande. Le fonctionnement de l'appareil se fait sans à-coup ni choc, évitant ainsi toute détérioration des tubes.

La présente invention n'est pas limitée à l'exemple de réalisation décrit ci-dessus, mais elle s'étend à toute modification couverte par les revendications. En particulier, la présence du poste d'attente 42 n'est pas nécessaire dans tous les cas et les paquets pourraient être transférés directement du poste de ligaturage au poste de palettisation, dans un appareil à rendement plus faible. D'autre part, le ligaturage pourrait être seulement semi-automatique ou même manuel. De même, on conçoit que la disposition des différents postes peut varier notablement par rapport à l'exemple décrit, notamment si le poste de ligaturage se trouve en plan, entre l'aire de formation et le poste d'attente. On pourrait aussi subdiviser les unités 1 et 2 en plusieurs paires d'unités partielles assurant chacune une partie des fonctions décrites. Enfin, il faut relever que l'appareil est capable de former et manipuler des paquets de tubes particulièrement longs et de les déposer sur plusieurs palettes alignées.

Par ailleurs, l'application de l'invention n'est pas limitée à des tubes en carton, mais s'étend à toutes sortes d'articles cylindriques tubulaires ou non, par exemple des profilés métalliques, des tuyaux en matière synthétique, etc.

## Revendications

1. Procédé pour empiler des articles cylindriques (**4**) dans des positions couchées parallèles sur une surface plate d'un support de transport (**6**), notamment d'une palette, dans lequel on forme une pile de paquets superposés (**25**) qui comprennent chacun au moins un rang horizontal d'articles (**4**) et au moins deux attaches souples (**27**) entourant l'ensemble des articles du paquet, un rang comprenant au moins trois articles (**4**), dans lequel on forme le ou les rangs constituant un paquet (**25**) sur un premier support (**15**) qui est séparé du support de transport (**6**), dans lequel on transfère ledit paquet (**25**) de manière à le déposer sur le support de transport ou sur un paquet déposé auparavant sur ce support, et dans lequel on ligature le paquet (**25**) au moyen desdites attaches (**27**) avant, pendant ou après son transfert vers le support de transport (**6**), caractérisé en ce qu'un paquet (**25**) comprend au moins deux rangs horizontaux d'articles juxtaposés (**4**), les articles étant disposés les uns sur les autres en quinconce, et en ce que, pour former un paquet (**25**), on forme d'abord un rang supérieur comportant un nombre donné d'articles (**4**), on soulève ce rang supérieur et l'on forme en-dessous de lui un rang inférieur comportant un article de plus que le rang supérieur, puis on abaisse le rang supérieur et on le dépose sur le rang inférieur avant de ligaturer le paquet.

2. Procédé selon la revendication 1, caractérisé en ce que l'on fixe plusieurs paquets (**25**) empilés sur ledit support de transport (**6**), au moyen d'attaches souples entourant à la fois le support et l'ensemble des paquets.

3. Appareil pour la mise en oeuvre du procédé selon la revendication 1, comportant une aire (**16**) de formation d'un rang d'articles cylindriques (**4**) juxtaposés dans des positions couchées parallèles, caractérisé en ce qu'il comporte des moyens de gerbage (**28**) pour soulever au moins un rang d'articles de l'aire de formation et pour le déposer sur un autre rang d'articles formé sur cette aire, des moyens (**26**) pour ligaturer ensemble au moins deux rangs d'articles superposés de façon à former un paquet (**25**), un poste de palettisation (**7**) pourvu d'un emplacement pour au moins une palette (**6**) de transport desdits paquets, et des moyens de manutention (**30, 43, 44**) agencés pour transférer successivement chaque paquet de l'aire de formation (**16**) au poste de palettisation (**7**), et en ce que les moyens de manutention comportent au moins un support horizontal (**44**) mobile dans un plan transversal par rapport à la direction axiale des articles (**4**), pour déposer chaque paquet sur au moins une palette (**6**) ou sur un autre paquet déjà déposé sur une palette.

4. Appareil selon la revendication 3, caractérisé en ce que l'aire de formation (**16**) est définie par les surfaces supérieures d'au moins deux supports parallèles (**15**), indépendants mécaniquement l'un de l'autre, disposés perpendiculairement aux articles et espacés l'un de l'autre, ainsi que par une butée latérale mobile (**17**) se trouvant sur un côté de l'aire où les articles sont amenés transversalement l'un après l'autre, par une butée latérale stationnaire (**18**) sur le côté opposé, et par une paire de butées verticales d'alignement (**23**) montées aux deux extrémités de l'aire de manière mobile l'une vers l'autre pour aligner les extrémités des articles d'un paquet.

5. Appareil selon la revendication 4, caractérisé en ce que les moyens de gerbage comportent une paire de bras (**28**) sensiblement parallèles aux deux supports (**15**) de l'aire de formation et mobiles dans leur direction longitudinale sur au moins un chariot mobile verticalement.

6. Appareil selon la revendication 3, caractérisé en ce que les moyens pour ligaturer comportent au moins une unité de ligaturage automatique (**26**), montée de manière mobile dans la direction axiale des articles pour être placée dans des positions sélectionnées le long d'un paquet d'articles (**25**).

7. Appareil selon la revendication 3, caractérisé en ce que ledit support horizontal (**44**) est mobile horizontalement sur un chariot (**45**) qui est mobile verticalement sur un bâti (**43**).

8. Appareil selon la revendication 5, caractérisé en ce qu'il se compose de deux unités de transfert et d'empilage (**1,2**), disposées symétriquement l'une de l'autre par rapport à un plan médian vertical (**3**) perpendiculaire à la direction axiale des articles (**4**), ces unités comprenant au moins les moyens de gerbage et les moyens de manutention et étant commandées en synchronisme pour traiter ensemble chaque article et chaque paquet, et en ce que l'espacement entre ces deux unités (**1,2**) est réglable.

9. Appareil selon la revendication 8, caractérisé en ce que chaque unité de transfert et d'empilage (**1,2**) comporte un bâti (**13, 14**) mobile sur une voie de roulement, ce bâti supportant les organes de l'aire de formation, les moyens de gerbage et les moyens de manutention qui sont prévus sur cette unité.

10. Appareil selon la revendication 9, caractérisé en ce que ledit bâti (**13**) présente une surface supérieure horizontale définissant un poste d'attente (**42**) pour au moins un paquet, et en ce que les moyens de manutention comprennent un premier moyen (**30**) de transfert des paquets entre l'aire de formation et le poste d'attente, et un second moyen (**44**) de transfert des paquets entre le poste d'attente et le poste de palettisation.

## Claims

1. Process for piling cylindrical objects (4) laid flat and parallel to each other on the flat surface of a shipping support (6), in particular a pallet, in which a pile of packets (25) is formed each comprised of at least one horizontal layer of objects (4) and at least two flexible straps (27) around the group of objects in the packet, one layer comprising at least three objects (4), in which the layer or layers comprising one packet (25) are formed on an initial support (15) which is separate from the shipping support (6), in which the said packet (25) is transferred in such a way as to lay it on the shipping support or on a packet previously laid on this support, and in which the packet (25) is bound by means of said straps (27) before, during, or after its transfer to the shipping support (6), characterized in that one packet (25) is comprised of at least two horizontal layers of objects laid side by side (4), the objects being laid on top of each other in a staggered fashion, and in that, to form a packet (25), a top layer is formed first with a given number of objects (4), this top layer is lifted and underneath a bottom layer is formed consisting of one more object than the top layer, then the top layer is lowered on to the bottom layer before binding the packet.

2. Process according to claim 1, characterized in that several packets (25) piled up are attached to the said shipping support (6) using flexible straps around both the support and the pile of packets.

3. Apparatus for implementing the process according to claim 1, including an area (16) for forming a layer of cylindrical objects (4) laid parallel side by side, characterized in that it includes stacking means (28) for lifting at least one layer of objects from the forming area and for laying it on another layer of objects formed on that area, means (26) for binding together at least two layers of objects one on top of the other so as to form a packet (25), a palletizing station (7) equipped with a place for at least one pallet (6) for shipping said packets, and means for handling (30, 43, 44) arranged for transferring each packet successively from the forming area (16) to the palletizing station (7), and in that the means for handling include at least one horizontal support (44) which can move in a direction perpendicular to the axis of any of the objects (4), to lay each packet on at least one pallet (6) or on another packet already laid on a pallet.

4. Apparatus according to claim 3, characterized in that the forming area (16) is defined by the top surfaces of at least two parallel supports (15), mechanically independent one from the other, arranged perpendicularly to the objects and spaced apart from each other, and also by a mobile lateral stop (17) located on one side of the area which the objects are brought in crosswise, one after the other, by a stationary lateral stop (18) on the opposite side, and by a pair of vertical stops (23) mounted at the two ends of the area that can be moved one toward the other to line up the ends of the objects of a packet.

5. Apparatus according to claim 4, characterized in that the means for stacking include a pair of arms (28) appreciably parallel to the two supports (15) of the forming area and which can move longitudinally over at least one truck that can move vertically.

6. Apparatus according to claim 3, characterized in that the means for binding include at least one automatic binding unit (26), mounted so as to be movable in the direction of the axis of the objects so as to be placed in positions selected along one packet of objects (25).

7. Apparatus according to claim 3, characterized in that the said horizontal support (44) can be moved horizontally on a truck (45) which can be moved vertically on a frame (43).

8. Apparatus according to claim 5, characterized in that it is made up of two transfer and piling units (1, 2), placed symmetrically to each other with respect to a vertical plane (3) perpendicular to the axis of the objects (4), these units comprising at least the stacking means and the handling means and being synchronized to handle each object and each packet, and in that the space between these two units (1, 2) is adjustable.

9. Apparatus according to claim 8, characterized in that each transfer and piling unit (1, 2) includes a frame (13, 14) which can move along a roller way, this frame supporting the forming area, the stacking means, and the handling means provided for this unit.

10. Apparatus according to claim 9, characterized in that the said frame (13) has a top horizontal surface defining a waiting station (42) for at least one packet, and in that the means for handling include an initial means (30) for transferring packets from the forming area to the waiting station, and a second means (44) for transferring packets from the waiting station to the palletizing station.

## Patentansprüche

1. Verfahren zum Stapeln zylindrischer Gegenstände (4) in liegen der, paralleler Stellung auf einer ebenen Fläche eines Transportträgers (6), insbesondere einer Palette, bei dem man einen Stapel übereinanderliegender Pakete (25) formt, die jeweils aus minde
stens einer waagrechten Reihe von Artikeln (4) und mindestens zwei biegsamen Verbindungselementen (27) bestehen, die sämtliche Artikel des Pakets umschliessen, wobei eine Reihe aus mindestens drei Artikeln (4) besteht, bei dem die ein Paket (25) bildende Reihe oder Reihen auf einem ersten Träger (15) geformt werden, der vom Transportträger (6) getrennt ist, bei dem besagtes Paket (25) so weitertransportiert wird, dass es auf dem Transportträger oder auf einem zuvor auf diesem Träger abgelegten Paket abgelegt wird, und bei dem das Paket (25) mit besagten Verbindungselementen (27) vor, während oder nach seinem Transport zum Transportträger (6) zusammengebunden wird, dadurch gekennzeichnet, dass ein Paket (25) mindestens zwei waagrechte Reihen nebeneinander angeordneter Artikel (4) umfasst, wobei die Artikel gegeneinander
versetzt und übereinander angeordnet sind, und dadurch, dass man, um ein Paket (25) zu bilden, zunächst eine obere Reihe mit einer bestimmten Anzahl Artikel (4) bildet, diese obere Reihe anhebt und darunter eine untere Reihe bildet, die einen Artikel mehr als die obere Reihe zählt, dann die obere Reihe absenkt und sie auf der unteren Reihe ablegt, bevor man das Paket zusammenbindet.

2. Verfahren gemäss Anspruch 1, dadurch gekennzeichnet, dass manmehrere, auf besagtem Transportträger (6) gestapelte Pakete mit biegsamen Verbindungselementen befestigt, die sowohl den Träger wie sämtliche Pakete umschliessen.

3. Vorrichtung zur Ausführung des Verfahrens gemäss Anspruch 1, mit einer Fläche (16) für die Bildung einer Reihe nebeneinanderliegender, in liegender paralleler Stellung angeordneter zylindrischer Artikel (4), dadurch gekennzeichnet, dass sie mit Stapel vorrichtungen (28) ausgerüstet ist, mit denen mindestens eine Reihe Artikel von der für die Zusammensetzung dienenden Fläche abgehoben und auf einer anderen, auf dieser Fläche gebildeten Reihe von Artikeln abgelegt werden kann, sowie mit Mitteln (26) zum Zusammenbinden von mindestens zwei Reihen von Artikeln, die so übereinander angeordnet sind, dass sie ein Paket (25) bilden, mit einer Palettisierungsstation (7), die über eine Fläche zur Aufnahme mindestens einer Palette (6) für den Transport besagter Pakete verfügt, und mit Fördermitteln (30, 43, 44), die so eingerichtet sind, dass sie nacheinander jedes Paket von der Fläche für die Zusammensetzung (16) zur Palettisierungsstation (7) transportieren können, und dadurch, dass zu den Fördermitteln mindestens ein im Verhältnis zur Axialrichtung der Artikel (4) in Querrichtung beweglicher waagrechter Träger (44) gehört, um jedes Paket auf mindestens einer Palette (6) oder auf einem anderen, bereits auf einer Palette abgelegten Paket ablegen zu können.

4. Vorrichtung gemäss Anspruch 3, dadurch gekennzeichnet, dass die Fläche für die Zusammensetzung der Pakete (16) durch die Oberseite von mindestens zwei, mechanisch voneinander unabhängigen, senkrecht zu den Artikeln angeordneten und voneinander getrennten Parallelträgern (15), sowie durch einen beweglichen seitlichen Anschlag (17), der sich an der Seite der Fläche befindet, auf die die Artikel nacheinander in Querrichtung zugeführt werden, durch einen festen seitlichen Anschlag (18) auf der Gegenseite, und durch ein Paar senkrechter Ausrichtungsanschläge (23) begrenzt wird, wobei diese Ausrichtungsanschläge gegeneinander verstellbar an beiden Enden der Fläche angeordnet sind, damit die Enden der ein Paket bildenden Artikel ausgerichtet werden können.

5. Vorrichtung gemäss Anspruch 4, dadurch gekennzeichnet, dass die Stapelvorrichtungen mit zwei Armen (28) ausgerüstet sind, die im wesentlichen parallel zu den beiden Trägern (15) der Zusammensetzfläche ausgerichtet und in ihrer Längsrichtung auf mindestens einem senkrecht verstellbaren Schlitten beweglich angeordnet sind.

6. Vorrichtung gemäss Anspruch 3, dadurch gekennzeichnet, dass die Mittel zum Zusammenbinden mindestens eine automatische Bindeeinheit (26) besitzen, die in der Axialrichtung der Artikel beweglich montiert ist, damit sie in ausgewählten Stellungen entlang einem Artikelpaket (25) angeordnet werden kann.

7. Vorrichtung gemäss Anspruch 3, dadurch gekennzeichnet, dass besagter waagrechter Träger (44) waagrecht auf einem Schlitten (45) beweglich angeordnet ist, der seinerseits auf einem Gestell (43) senkrecht verstellbar ist.

8. Vorrichtung gemäss Anspruch 5, dadurch gekennzeichnet, dass sie sich aus zwei Transport- und Stapeleinheiten (1, 2) zusammensetzt, die im Verhältnis zu einer mittleren senkrechten Ebene (3), die senkrecht zur Axialrichtung der Artikel (4) verläuft, symmetrisch zueinander angeordnet sind, wobei zu diesen Einheiten mindestens die Stapel- und die Fördermittel gehören und sie synchron gesteuert werden, um gemeinsam jeden Artikel und jedes Paket zu verarbeiten, und dadurch, dass der Abstand zwischen diesen beiden Einheiten (1, 2) einstellbar ist.

9. Vorrichtung gemäss Anspruch 8, dadurch gekennzeichnet, dass zu jeder Transport- und Stapeleinheit (1, 2) ein auf einer Laufbahn bewegliches Gestell (13, 14) gehört, das die Organe der Zusammensetzfläche, die Stapel- und die Fördermittel trägt, die für die jeweilige Einheit vorgesehen sind.

10. Vorrichtung gemäss Anspruch 9, dadurch gekennzeichnet, dass besagtes Gestell (13) eine waagrechte Oberseite aufweist, die eine Wartestation (42) für mindestens ein Paket darstellt, und dadurch, dass die Fördermittel ein erstes Transportmittel (30) für die Förderung der Pakete zwischen der Zusammensetzfläche und der Wartestation und ein zweites Transportmittel (44) für die Forderung der Pakete von der Warte- zur Palettisierungsstation einschliessen.
